# EUROPÄISCHE PATENTSCHRIFT

(11) **EP 2 556 736 B1**
(45) Veröffentlichungstag und Bekanntmachung des Hinweises auf die Patenterteilung: **21.01.2015**
(21) Anmeldenummer: 12172687.1
(22) Anmeldetag: 20.06.2012
(51) Int. Cl.: A01B 59/00

(54) **Längenveränderliche Hubstrebe**
Lifting strut which can be adjusted in length
Colonne de levage modifiable en longueur

(30) Priorität: 08.08.2011 DE 102011052461
(43) Veröffentlichungstag der Anmeldung: 13.02.2013
(73) Patentinhaber: GKN Walterscheid GmbH, 53797 Lohmar (DE)
(72) Erfinder: Laubner, Joachim, 53474 Ahrweiler (DE); Schröder, Achim, 53840 Troisdorf (DE); Adamek, Wolfgang, 53797 Lohmar (DE); Zimmermann, Marc, 53721 Siegburg (DE)
(74) Vertreter: Müller, Thomas Michael

(56) Entgegenhaltungen:
- EP-A1- 1 332 657
- EP-A1- 1 982 570
- EP-A1- 2 130 420
- DE-B- 1 238 706
- US-A- 6 056 069

## Beschreibung

Die Erfindung betrifft eine Längenveränderliche Hubstrebe für eine Anbauvorrichtung eines Traktors, umfassend zwei Anschlusselemente zum Verbinden der Hubstrebe mit Bauteilen der Anbauvorrichtung und ein Verstellelement zur Feineinstellung der Länge der Hubstrebe.

Eine solche Hubstrebe ist aus der DE 39 38 418 C1 bekannt. Das Verstellelement kann über eine Griffhülse verdreht werden, wobei die beiden Anschlusselemente drehfest mit dem Kraftantrieb des Traktors bzw. mit dem Unterlenker verbunden sind. Somit lässt sich durch Drehen des Verstellelements die Länge der Hubstrebe an das zu benutzende Gerät anpassen. Vergleichbare Hubstreben sind auch aus der DE 1 096 102 B sowie der DE 40 22 343 C2 bekannt.

Heutige Traktoren weisen neben einem Dreipunktgestänge auch Anhängekupplungen z. B. in Form von Pitonkupplungen oder Kugelkupplungen auf, mit denen Anhänger gezogen werden. Beim Anhängen eines Anhängers, der über eine unten angeordnete Anhängekupplung (Untenanhängung) gezogen werden soll, sind die Unterlenker des Dreipunktgestänges häufig im Kollisionsbereich der Deichsel des Anhängers. Die Unterlenker müssen daher aus dem Bewegungsbereich der Deichsel geschwenkt oder vollständig demontiert werden. Die bekannten Lösungen von Hubstreben lassen sich jedoch nur bedingt verkürzen und erreichen nicht eine minimale Länge, bei denen die Unterlenker aus dem potentiellen Kollisionsbereich der Anhängerdeichsel geschwenkt sind.

EP 1 332 657 A1 offenbart eine Seitenstrebe für ein Dreipunktgestänge eines Traktors. Die Seitenstrebe ist zwischen dem Chassis des Traktors und einem Unterlenker des Dreipunktgestänges angeordnet und ist zur seitlichen Verstellung des Unterlenkers in der Länge einstellbar. Hierzu weist die Seitenstrebe zwei Kugellagerelemente auf, von denen eines mit dem Chassis des Traktors und das andere mit dem Unterlenker verbindbar ist. Die Kugellagerelemente sind ferner jeweils über eine Gewindeverbindung mit einer zentralen Rohranordnung verbunden, so dass hierdurch eine Feineinstellung der Länge der Seitenstrebe erzielt wird. Ferner ist die Rohranordnung selbst in ihrer Länge einstellbar, wobei ein zentraler Stange, der mit einem der Kugellagerelemente verbunden ist, gegenüber einer Hülse axial verschiebbar ist. Der zentrale Stab weist mehrere quer zur Längsachse der Seitenstrebe verlaufende Bohrungen auf, in die ein Pin einführbar ist, welcher durch eine Bohrung der Hülse und eine der mehreren Bohrungen der Stange verläuft. Durch die mehreren Bohrungen in der Stange sind mehrere diskrete Stellungen möglich und somit diskrete Längen der Hubstrebe realisiert. Diese Verstellung dient als Schnellverstellmechanismus.

Aufgabe der vorliegenden Erfindung ist es daher, eine Hubstrebe bereitzustellen, die einen größeren Verstellweg aufweist.

Die Aufgabe wird erfindungsgemäß durch eine längenveränderliche Hubstrebe nach Anspruch 1 gelöst.

Die erfindungsgemäße Hubstrebe lässt sich somit zum einen über das Verstellelement in der Länge fein einstellen. Neben dieser Verstellung ist zusätzlich der Schnellverstellmechanismus vorgesehen, der einen zusätzlichen Verstellweg ermöglicht, so dass die Hubstrebe auf eine geringere Länge einstellbar ist. Zudem lässt sich die Hubstrebe ohne langwierige Verstellung des Verstellelements schnell in eine Parkposition überführen, in der sich der Unterlenker nicht mehr im Kollisionsbereich der Anhängerdeichsel befindet.

Dies wird dadurch erzielt, dass der Schnellverstellmechanismus ein Scharnier umfasst, mittels dessen die Hubstrebe zwischen einer gestreckten Stellung und einer abgeknickten Stellung verstellbar ist. Durch das Abknicken der Hubstrebe lässt sich die Länge der Hubstrebe in einem erheblichen Maße verkürzen. Vorzugsweise weist das Verstellelement an zwei Enden angeordnete gegensinnige Gewinde auf. Hierbei weisen die Anschlusselemente jeweils ein Gewinde auf, mit denen die Anschlusselemente mit den Gewinden des Verstellelements verschraubt sind.

Zur Feineinstellung lässt sich das Verstellelement stufenlos oder in kleineren Schritten als der Schnellverstellmechanismus verstellen.

Das Scharnier kann in zumindest einem der beiden

Anschlusselemente vorgesehen sein.

Das erste Anschlusselement weist Befestigungsmittel zum Verbinden desselben mit einem Kraftantrieb der Anbauvorrichtung auf. Das zweite Anschlusselement weist Befestigungsmittel auf, mit denen die Hubstrebe mit einem Unterlenker der Anbauvorrichtung verbindbar ist.

Das Scharnier umfasst ein erstes Scharnierelement und ein zweites Scharnierelement, die um eine Scharnierachse schwenkbar miteinander verbunden sind. Das erste Scharnierelement ist mit einem ersten Teil des Verstellelements und das zweite Scharnierelement mit einem zweiten Teil des Verstellelements verbunden.

Hierbei kann das erste Teil des Verstellelements das Gewinde aufweisen, mit dem das Verstellelement mit dem ersten Anschlusselement verschraubt ist, und das zweite Teil des Verstellelements das Gewinde aufweisen, mit dem das Verstellelement mit dem zweiten Anschlusselement verschraubt ist.

Zum Arretieren der Hubstrebe in der gestreckten Stellung sind Arretiermittel vorgesehen. Ferner können Arretiermittel vorgesehen sein, mittels derer die Hubstrebe in der abgeknickten Stellung arretierbar ist. Bei den Arretiermitteln kann es sich um jeweils separate Arretiermittel oder um ein- und dieselben Arretiermittel handeln.

Die Arretiermittel weisen vorzugsweise einen Arretierstift auf, der in der gestreckten Stellung in Arretierbohrungen der beiden Scharnierelemente einsetzbar ist. Somit sind die beiden Scharnierelemente über den Arretierstift gegeneinander abgestützt. Hierbei ist der Arretierstift parallel zur Scharnierachse angeordnet.

Die Arretiermittel zum Arretieren der Hubstrebe in der abgeknickten Stellung können ebenfalls einen Arretierstift umfassen, bei dem es sich um denselben Arretierstift handelt, der zum Arretieren in der gestreckten Stellung verwendet wird. Dieser ist in der abgeknickten Stellung in zumindest einer Arretierbohrung eines der beiden Scharnierelemente einsetzbar, wobei sich dann das andere Scharnierelement im Schwenksinne gegen den Arretierstift abstützen kann, so dass das erste Anschlusselement nicht aus der abgeknickten Stellung in Richtung zur gestreckten Stellung bewegt werden kann.

Ein bevorzugtes Ausführungsbeispiel wird im folgenden anhand der Zeichnungen näher erläutert. Hierin zeigt
- Figur 1: eine Seitenansicht einer erfindungsgemäßen Hubstrebe in gestreckter Stellung an einer Anbauvorrichtung in Form eines Dreipunktgestänge eines Traktors,
- Figur 2: die Hubstrebe gemäß Figur 1 in abgeknickter Stellung,
- Figur 3: eine vergrößerte perspektivische Ansicht des Scharniers,
- Figur 4: eine Explosionsdarstellung der Hubstrebe gemäß Figur 1 im Bereich des Scharniers und
- Figur 5: einen Längsschnitt der Hubstrebe gemäß Figur 1.

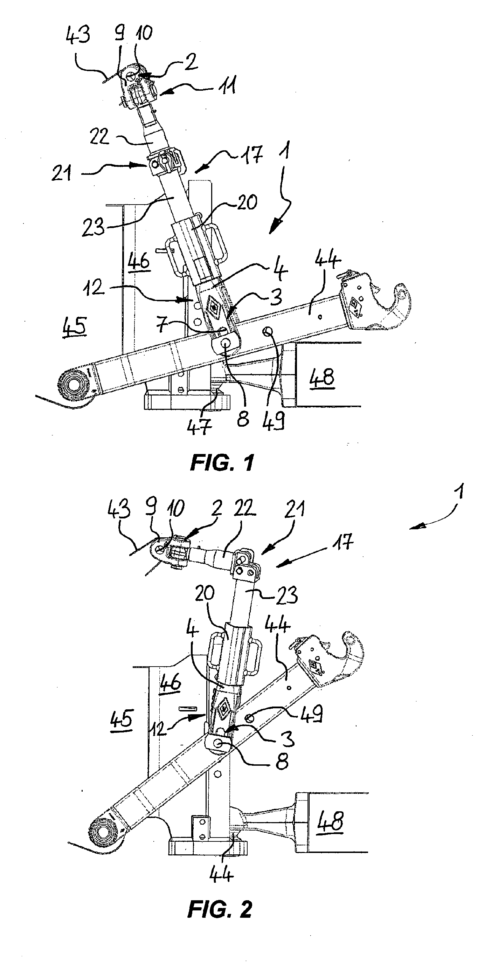

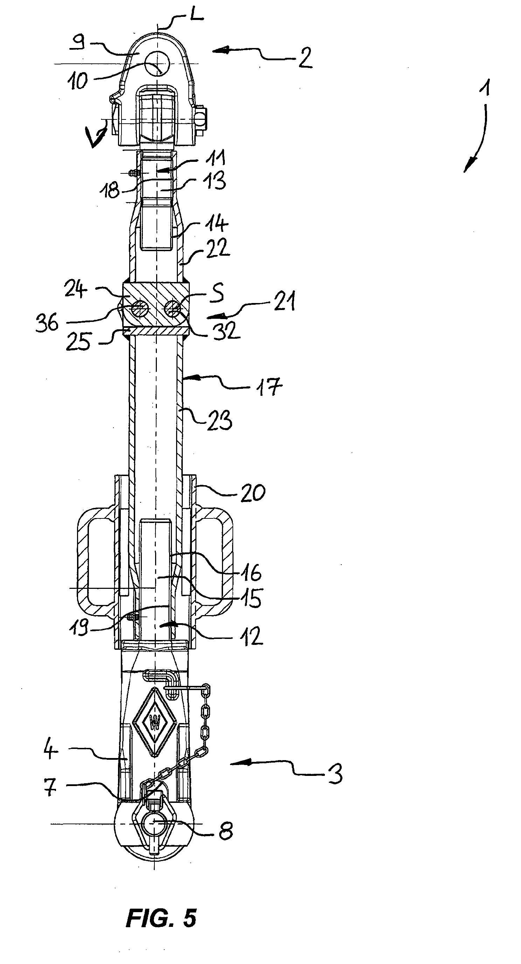

Die Figuren 1 bis 5 zeigen eine Hubstrebe 1 in unterschiedlichen Ansichten und werden im folgenden zusammen beschrieben. Die Hubstrebe 1 erstreckt sich entlang einer Längsachse L und weist an einem, bezogen auf die Einbaulage, oberen Ende erste Befestigungsmittel 2 und an einem unteren Ende zweite Befestigungsmittel 3 auf. Die ersten Befestigungsmittel 2 umfassen ein Befestigungselement 9, welches eine Bohrung 10 aufweist, deren Erstreckungsachse die Längsachse L schneidet. Über die Bohrung 10 kann das Befestigungselement 9 wie in Figur 1 dargestellt mit einem Kraftantrieb 43 zum Heben und Senken von Unterlenkern 44 eines Dreipunktgestänges am Heck 45 eines Traktors verbunden werden. Um auch ein seitliches Verschwenken der Unterlenker 44 zu ermöglichen, ist das Befestigungselement 9 um eine Schwenkachse V schwenkbar zur restlichen Hubstrebe 1 angeordnet, wobei die Schwenkachse V die Längsachse L in einem rechten Winkel schneidet. In Figur 1 ist ferner ein Anhängebock 46 dargestellt, der sich zwischen zwei Unterlenkern 44 befindet und eine Anhängekupplung 47 (hier eine Kugelkupplung) zum Ziehen eines Anhängers über eine Deichsel 48 aufweist.

Die zweiten Befestigungsmittel 3 umfassen eine Gabel 4 mit zwei Gabelarmen 5, 6. Zur Montage umgreifen die Gabelarme 5, 6 den Unterlenker 44. Zur Befestigung sind Langlöcher 7 in den Gabelarm 5, 6 vorgesehen, durch die ein Stift 8 hindurchgeführt ist. Der Stift 8 ist im montierten Zustand auch durch eine Befestigungsbohrung 49 im Unterlenker hindurchgeführt, so dass die Hubstrebe 1 mit dem Unterlenker 44 verbunden ist.

Die Hubstrebe 1 umfasst ein erstes Anschlusselement 11 mit den ersten Befestigungsmitteln 2 sowie ein zweites Anschlusselement 12 mit den zweiten Befestigungsmitteln 3. Die beiden Anschlusselemente 11, 12 sind entlang der Längsachse L zueinander verstellbar. Hierzu weist das erste Anschlusselement 11 einen Zapfen 13 mit einem Außengewinde 14 auf. Das zweite Anschlusselement 12 weist ebenfalls einen Zapfen 15 mit einem Außengewinde16 auf. Ferner ist ein Verstellelement 17 vorgesehen, welches an einem ersten Ende ein Innengewinde 18 und an einem zweiten Ende ein hierzu gegensinniges Innengewinde 19 aufweist. Das Außengewinde 14 des ersten Anschlusselements 11 ist in eines der Innengewinde 18 des Verstellelements 17 eingeschraubt. Das Außengewinde 16 des zweiten Anschlusselements 12 ist in das andere Innengewinde 19 des Verstellelements 17 eingeschraubt. Somit können durch Drehen des Verstellelements 17 die beiden Anschlusselemente 11, 12 aufeinander zu bewegt oder voneinander weg bewegt werden. Zum Verstellen des Verstellelements 17 dient ein Griffelelement 20, welches mit dem Verstellelement 17 drehfest verbunden ist.

Um neben der Feineinstellung über das Verstellelement 17 auch eine schnelle Längenverstellung über einen möglichst großen Verstellweg zu gewährleisten, ist ein Schnellverstellmechanismus mit einem Scharnier 21 vorgesehen. Das Scharnier 21 teilt das Verstellelement 17 in zwei Bauteile, nämlich in ein erstes Teil 22, an dem eines der Innengewinde 18 vorgesehen ist, sowie ein zweites Teil 23, an dem das andere der Innengewinde 19 angeordnet ist. Über das Scharnier 21 können die beiden Teile 22, 23 zwischen der in Figur 1 dargestellten gestreckten Position und in der in Figur 2 dargestellten abgeknickten Stellung verstellt werden.

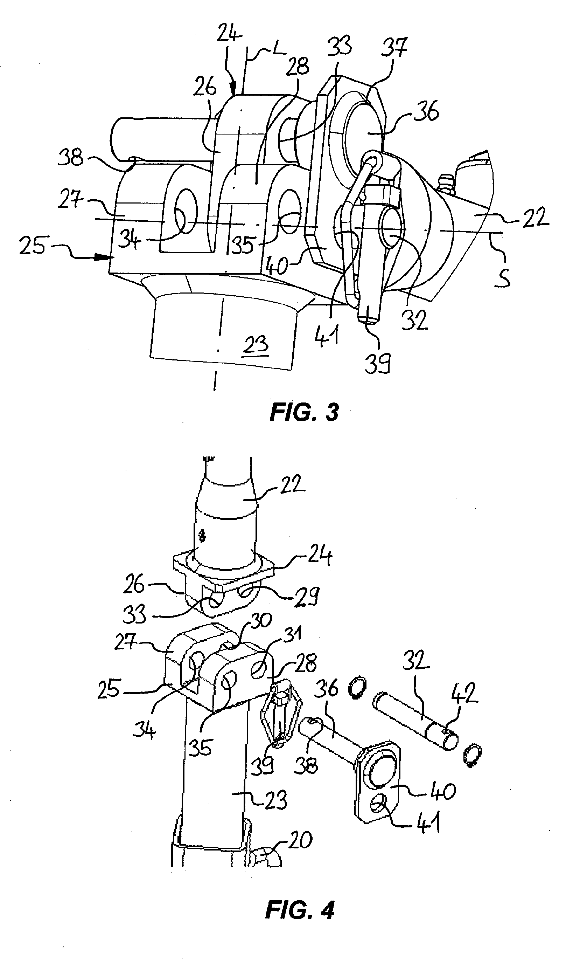

Figur 3 zeigt in einer vergrößerten perspektivischen Ansicht das Scharnier 21. Das Scharnier 21 umfasst ein erstes Scharnierelement 24, welches mit dem ersten Teil 22 des Verstellelements 17 verbunden ist. Ferner weist das Scharnier 21 ein zweites Scharnierelement 25 auf, welches mit dem zweiten Teil 23 des Verstellelements 17 verbunden ist. Das erste Scharnierelement 24 weist einen zentralen Ansatz 26 auf. Das zweite Scharnierelement 25 ist gabelförmig mit einem ersten Gabelarm 27 und einem zweiten Gabelarm 28 gestaltet. Die beiden Gabelarme 27, 28 umschließen den zentralen Ansatz 26 des ersten Scharnierelements 24. In dem zentralen Ansatz 26 ist eine Scharnierbohrung 29 vorgesehen. In jedem der Gabelarme 27, 28 ist ebenfalls eine Scharnierbohrung 30, 31 vorgesehen, die mit der Scharnierbohrung 29 des zentralen Ansatzes 26 fluchten. Durch die Scharnierbohrungen 29, 30, 31 ist ein Scharnierbolzen 32 hindurchgeführt und axial gesichert. Der Scharnierbolzen 32 ist, ebenso wie die Scharnierbohrungen 29, 30, 31, koaxial zur Scharnierachse S ausgerichtet, wobei die Scharnierachse S die Längsachse L mit Abstand kreuzt. Prinzipiell kann diese jedoch auch die Längsachse L schneiden.

Im zentralen Ansatz 26 ist ferner eine Arretierbohrung 33 vorgesehen, die parallel zur Scharnierbohrung 29 angeordnet ist. Darüber hinaus sind in den Gabelarmen 27, 28 Arretierbohrungen 34, 35 vorgesehen, die parallel zu den Scharnierbohrungen 30, 31 der Gabelarme 27, 28 angeordnet sind. In der gestreckten Stellung der Hubstrebe 1 gemäß Figur 1 fluchten alle Arretierbohrungen 33, 34, 35. Durch die Arretierbohrungen 33, 34, 35 ist ein Arretierstift 36 hindurchgeführt, so dass die Hubstrebe 1 in der gestreckten Position gesichert ist. Durch die parallele Anordnung der Scharnierbohrungen 29, 30, 31 bezogen auf die Arretierbohrungen 33, 34, 35 und die Anordnung sämtlicher Bohrungen mit Abstand zur Längsachse L ist eine möglichst günstige Abstützung gegenüber Knickmomenten gewährleistet.

Der Arretierstift 36 weist einen Stiftkopf 37 auf, der einen größeren Durchmesser aufweist als die Arretierbohrungen 33, 34, 35, so dass in einer Einsteckrichtung ein axialer Anschlag gegeben ist. An einem dem Stiftkopf 37 abgewandten Ende weist der Arretierstift 36 eine Sicherungsbohrung 38 auf, die quer durch den Arretierstift 36 verläuft und durch welche ein Sicherungsstift 39 hindurch gesteckt ist, um ein unbeabsichtigtes Herausziehen des Arretierstifts 36 zu vermeiden.

Zum Abknicken der Hubstrebe 1 wird der Arretierstift 36 aus den Arretierbohrungen 33, 34, 35 herausgezogen. Im Anschluss kann das erste Teil 22 des Verstellelements 17 relativ zum zweiten Teil 22 des Verstellelements 17 um die Schwenkachse S abgeknickt werden. In der in Figur 2 dargestellten abgeknickten Stellung ist der zentrale Ansatz 26 teilweise aus dem Zwischenraum zwischen den Gabelarmen 27, 28 herausgeschwenkt, so dass die Arretierbohrung 33 nicht mehr von den Gabelarmen 27, 28 umschlossen ist. In dieser Stellung kann der Arretierstift 36 durch die Arretierbohrung 33 des zentralen Ansatzes 26 hindurch gesteckt werden. Beim Zurückschwenken der Hubstrebe 1 in Richtung zur gestreckten Stellung stößt der Arretierstift 36 dann außen gegen die Gabelarme 27, 28 und verhindert ein Überführen der Hubstrebe 1 in Richtung zur gestreckten Stellung.

Am Stiftkopf 37 des Arretierstifts 36 ist zudem eine Kopfplatte 40 angeordnet, die sich senkrecht zum Arretierstift 36 erstreckt. In der Kopfplatte 40 ist eine Sicherungsbohrung 41 vorgesehen, die parallel zum Arretierstift 36 verläuft. In der abgeknickten Stellung kann die Kopfplatte 40 auf ein vorstehendes Ende des Scharnierbolzens 32 aufgesteckt werden. In dem vorstehenden Ende des Scharnierbolzens 32 ist eine quer zum Scharnierbolzen 32 verlaufende Sicherungsbohrung 42 vorgesehen, in die der Sicherungsstift 39 eingesetzt werden kann, so dass ein Herausziehen des Arretierstifts 36 aus der Arretierbohrung 33 des zentralen Ansatzes 26 verhindert wird.

### Bezugszeichenliste

- 1: Hubstrebe
- 2: erste Befestigungsmittel
- 3: zweite Befestigungsmittel
- 4: Gabel
- 5: Gabelarm
- 6: Gabelarm
- 7: Langloch
- 8: Stift
- 9: Befestigungselement
- 10: Bohrung
- 11: erstes Anschlusselement
- 12: zweites Anschlusselement
- 13: Zapfen
- 14: Außengewinde
- 15: Zapfen
- 16: Außengewinde
- 17: Verstellelement
- 18: Innengewinde
- 19: Innengewinde
- 20: Griffelement
- 21: Scharnier
- 22: erstes Teil des Verstellelements
- 23: zweites Teil des Verstellelements
- 24: erstes Scharnierelement
- 25: zweites Scharnierelement
- 26: zentraler Ansatz
- 27: erster Gabelarm
- 28: zweiter Gabelarm
- 29: Scharnierbohrung
- 30: Scharnierbohrung
- 31: Scharnierbohrung
- 32: Scharnierbolzen
- 33: Arretierbohrung
- 34: Arretierbohrung
- 35: Arretierbohrung
- 36: Arretierstift
- 37: Stiftkopf
- 38: Sicherungsbohrung
- 39: Sicherungsstift
- 40: Kopfplatte
- 41: Sicherungsbohrung
- 42: Sicherungsbohrung
- 43: Kraftantrieb
- 44: Unterlenker
- 45: Heck eines Traktors
- 46: Anhängebock
- 47: Anhängekupplung
- 48: Deichsel
- 49: Befestigungsbohrung

- L: Längsachse
- S: Scharnierachse
- V: Schwenkachse

## Patentansprüche

1. Längenveränderliche Hubstrebe (1) für eine Anbauvorrichtung eines Traktors, umfassend
zwei Anschlusselemente (11, 12) zum Verbinden der Hubstrebe (1) mit Bauteilen (43, 44) der Anbauvorrichtung und
ein Verstellelement (17) zur Feineinstellung der Länge der Hubstrebe (1),
**dadurch gekennzeichnet,**
**dass** ein Schnellverstellmechanismus (21) vorgesehen ist, mittels dessen die Hubstrebe (1) in der Länge verstellbar und in zumindest zwei diskreten Stellungen arretierbar ist, und
**dass** der Schnellverstellmechanismus ein Scharnier (21) umfasst, mittels dessen die Hubstrebe (1) zwischen einer gestreckten Stellung und einer abgeknickten Stellung verstellbar ist.

2. Längenveränderliche Hubstrebe nach Anspruch 1,
**dadurch gekennzeichnet,**
**dass** das Verstellelement (17) an zwei Enden angeordnete gegensinnige Gewinde (18, 19) aufweist, und
**dass** die Anschlusselemente (11, 12) jeweils ein Gewinde (14, 16) aufweisen, mit denen die Anschlusselemente (11, 12) mit den Gewinden (18, 19) des Verstellelements (17) verschraubt sind.

3. Längenveränderliche Hubstrebe nach einem der Ansprüche 1 oder 2,
**dadurch gekennzeichnet,**
**dass** das Verstellelement (17) stufenlos oder in kleineren Schritten als der Schnellverstellmechanismus verstellbar ist.

4. Längenveränderliche Hubstrebe nach einem der Ansprüche 1 bis 3,
**dadurch gekennzeichnet,**
**dass** das Scharnier (21) im Verstellelement (17) angeordnet ist.

5. Längenveränderliche Hubstrebe nach den Ansprüchen 1 bis 4,
**dadurch gekennzeichnet,**
**dass** das Scharnier (21) ein erstes Scharnierelement (24) und ein zweites Scharnierelement (25) umfasst, die um eine Scharnierachse (S) schwenkbar miteinander verbunden sind.

6. Längenveränderliche Hubstrebe nach Anspruch 5,
**dadurch gekennzeichnet,**
**dass** das erste Scharnierelement (24) mit einem ersten Teil (22) des Verstellelements (17) und das zweite Scharnierelement (25) mit einem zweiten Teil (23) des Verstellelements (17) verbunden ist.

7. Längenveränderliche Hubstrebe nach Anspruch 6,
**dadurch gekennzeichnet,**
**dass** das erste Teil (22) des Verstellelements (17) das Gewinde (18) aufweist, mit dem das Verstellelement (17) mit dem ersten Anschlusselement (11) verschraubt ist, und
**dass** das zweite Teil (23) des Verstellelements (17) das Gewinde (19) aufweist, mit dem das Verstellelement (17) mit dem zweiten Anschlusselement (12) verschraubt ist.

8. Längenveränderliche Hubstrebe nach den Ansprüchen 1 bis 7,
**dadurch gekennzeichnet,**
**dass** Arretiermittel (33, 34, 35, 36) vorgesehen sind, mittels derer die Hubstrebe (1) in der gestreckten Stellung arretierbar ist.

9. Längenveränderliche Hubstrebe nach den Ansprüchen 1 bis 8,
**dadurch gekennzeichnet,**
**dass** Arretiermittel (33, 36) vorgesehen sind, mittels derer die Hubstrebe (1) in der abgeknickten Stellung arretierbar ist.

10. Längenveränderliche Hubstrebe nach Anspruch 8 oder 9,
**dadurch gekennzeichnet,**
**dass** die Arretiermittel zum Arretieren der Hubstrebe (1) in der gestreckten Stellung einen Arretierstift (36) umfassen, der in Arretierbohrungen (33, 34, 35) in den beiden Scharnierelementen (24, 25) einsetzbar ist.

11. Längenveränderliche Hubstrebe nach Anspruch 8 bis10,
**dadurch gekennzeichnet,**
**dass** die Arretiermittel zum Arretieren der Hubstrebe (1) in der abgeknickten Stellung einen Arretierstift (36) umfassen, der in zumindest einer Arretierbohrung (33) einer der beiden Scharnierelemente (24) einsetzbar ist und gegen den sich das andere Scharnierelement (25) im Schwenksinne abstützen kann.

## Claims

1. Length adjustable lifting strut (1) for an attachment device of a tractor comprising
two connection elements (11, 12) for connecting the lifting strut (1) to components (43, 44) of the attachment device and
an adjustment element (17) for the fine adjustment of the length of the lifting strut (1),
**characterised in**
**that** a quick adjustment mechanism (21) is provided, by means of which the lifting strut (1) is adjustable in length and is at least lockable in two discrete positions, and
**that** the quick adjustment mechanism comprises a hinge (21), by means of which the lifting strut (1) is displaceable between a stretched position and a bent position.

2. Length adjustable lifting strut according to claim 1,
**characterised in**
**that** the adjustment element (17) has at two ends threads (18, 19) with opposite threading sense to each other, and
**that** the connection means (11, 12) have, respectively, one thread (14, 16), with which the connection means (11, 12) are screwed to the threads (18, 19) of the adjustment element (17).

3. Length adjustable lifting strut according to one of claims 1 or 2,
**characterised in**
**that** the adjustment element (17) is adjustable continuously or in smaller steps than the quick adjustment mechanism.

4. Length adjustable lifting strut according to one of claims 1 to 3,
**characterised in**
**that** the hinge (21) is arranged in the adjustment element (17).

5. Length adjustable lifting strut according to the claims 1 to 4,
**characterised in**
**that** the hinge (21) comprises a first hinge element (24) and a second hinge element (25), which are connected to each other pivotably around a hinge axis (S).

6. Length adjustable lifting strut according to claim 5,
**characterised in**
**that** the first hinge element (24) is connected to a first part (22) of the adjustment element (17) and the second hinge element (25) is connected to a second part (23) of the adjustment element (17).

7. Length adjustable lifting strut according to claim 6,
**characterised in**
**that** the first part (22) of the adjustment element (17) has the thread (18), with which the adjustment element (17) is screwed to the first connection element (11), and
**that** the second part (23) of the adjustment element (17) has the thread (19), with which the adjustment element (17) is screwed to the second connection element (12).

8. Length adjustable lifting strut according to claims 1 to 7,
**characterised in**
**that** locking means (33, 34, 35, 36) are provided, by means of which the lifting strut (1) is lockable in the stretched position.

9. Length adjustable lifting strut according to the claims 1 to 8,
**characterised in**
**that** locking means (33, 36) are provided, by means of which the lifting strut (1) is lockable in the bent position.

10. Length adjustable lifting strut according to claim 8 or 9,
**characterised in**
**that** the locking means comprise a locking pin (36), which is insertable into locking bores (33, 34, 35) in the two hinge elements (24, 25), for locking the lifting strut (1) in the stretched position.

11. Length adjustable lifting strut according to claim 8 to 10,
**characterised in**
**that** the locking means comprise, for locking the lifting strut (1) in the bent position, a locking pin (36), which is insertable in at least one locking bore (33) of one of the two hinge elements (24) and on which the other hinge element (25) can be supported in the pivot sense.

## Revendications

1. Colonne de levage modifiable en longueur (1) pour une barre d'attelage d'un tracteur, comprenant deux éléments de raccordement (11, 12) pour réunir la colonne de levage (1) à des éléments (43, 44) de la barre d'attelage et un élément de réglage (17) pour régler de façon précise la longueur de la colonne de levage (1), **caractérisée en ce qu'**un mécanisme de réglage rapide (21) est prévu au moyen duquel la colonne de levage (1) peut être réglée dans la longueur et peut être bloquée dans au moins deux positions discrètes, et **en ce que** le mécanisme de réglage rapide comprend une charnière (21) au moyen de laquelle la colonne de levage (1) peut être réglée entre une position étendue et une position pliée.

2. Colonne de levage modifiable en longueur selon la revendication 1 **caractérisée en ce que** l'élément de réglage (17) comporte aux deux extrémités un filetage (18, 19) à sens opposé disposé aux deux extrémités, et **en ce que** les éléments de raccordement (11, 12) comportent respectivement un filetage (14, 16) avec lequel les éléments de raccordement (11, 12) sont vissés aux filetages (18, 19) de l'élément de réglage (17).

3. Colonne de levage modifiable en longueur selon l'une quelconque des revendications 1 ou 2 **caractérisée en ce que** l'élément de réglage (17) peut être réglé en continu ou pare phases plus petites que le mécanisme de réglage rapide.

4. Colonne de levage modifiable en longueur selon l'une quelconque des revendications 1 à 3 **caractérisée en ce que** la charnière (21) est disposée dans l'élément de réglage (17).

5. Colonne de levage modifiable en longueur selon l'une quelconque des revendications 1 à 4 **caractérisée en ce que** la charnière (21) comprend un premier élément de charnière (24) et un deuxième élément de charnière (25) qui sont reliés entre eux de façon pivotable autour d'un axe de charnière (S).

6. Colonne de levage modifiable en longueur selon la revendication 5 **caractérisée en ce que** le premier élément de charnière (24) est relié à une première pièce (22) de l'élément de réglage (17) et le deuxième élément de charnière (25) à une deuxième pièce (23) de l'élément de réglage (17).

7. Colonne de levage modifiable en longueur selon la revendication 6 **caractérisée en ce que** la première pièce (22) de l'élément de réglage (17) comporte le filetage (18) avec lequel l'élément de réglage (17) est vissé au premier élément de raccordement (11), et **en ce que** la deuxième pièce (23) de l'élément de réglage (17) comporte le filetage (19) avec lequel l'élément de réglage (17) est vissé au deuxième élément de raccordement (12).

8. Colonne de levage modifiable en longueur selon les revendications 1 à 7 **caractérisée en ce que** des moyens de blocage (33, 34, 35, 36) sont prévus au moyen desquels la colonne de levage (1) peut être bloquée das la position étendue.

9. Colonne de levage modifiable en longueur selon les revendications 1 à 8 **caractérisée en ce que** des moyens de blocage (33, 36) sont prévus au moyen desquels la colonne de levage (1) peut être bloquée dans la position pliée.

10. Colonne de levage modifiable en longueur selon la revendication 8 ou 9 **caractérisée en ce que** les moyens de blocage pour bloquer la colonne de levage (1) comprennent une goupille de blocage (36) dans la position étendue qui peut être introduite dans les trous de blocage (33, 34, 35) dans les deux éléments de charnières (24, 25).

11. Colonne de levage modifiable en longueur selon la revendication 8 à 10 **caractérisée en ce que** le moyen de blocage pour bloquer la colonne de levage (1) dans la position pliée comprennent une goupille de blocage (36) qui peut être insérée au moins dans un trou de blocage (33) d'un des deux éléments de charnière (24) et contre lequel l'autre élément de charnière (25) peut être appuyé dans le sens de pivotement.
